# EUROPEAN PATENT APPLICATION

(11) **EP 4 417 651 A1**
(43) Date of publication of application: **21.08.2024**
(21) Application number: 22880728.5
(22) Date of filing: 20.09.2022
(51) Int. Cl.: C08L 83/05, B05D 5/00, B05D 7/24, C08L 83/07, C09D 183/04, C09K 3/18

(54) **ORGANOALKOXYSILANE-CONTAINING COMPOSITION, METHOD FOR PRODUCING SAME AND WATER ABSORPTION INHIBITOR**

(30) Priority: 12.10.2021 JP 2021167149
(71) Applicant: SHIN-ETSU CHEMICAL CO., LTD., Tokyo 1000005 (JP)
(72) Inventor: FUKAMACHI Takumi, Annaka-shi, Gunma 379-0224 (JP)
(74) Representative: Sonnenhauser, Thomas Martin
(86) International application number: PCT/JP2022/035011
(87) International publication number: WO 2023/063032

(57) **Abstract**

The present invention is an organoalkoxysilane-containing composition including: (A) an organohydrogenpolysiloxane having a structural unit selected from the group consisting of SiO₂, HSiO_{1.5}, R¹SiO_{1.5}, R¹HSiO, R¹₂SiO, R¹₂HSiO_{0.5}, and R¹₃SiO_{0.5}; (B) an organopolysiloxane having a structural unit selected from the group consisting of SiO₂, R²SiO_{1.5}, R¹SiO_{1.5}, R¹R²SiO, R¹₂SiO, R¹₃SiO_{0.5}, and R²₂R²SiO_{0.5}, wherein R¹ represents a monovalent hydrocarbon group except for an aliphatic unsaturated group, and R² represents an alkenyl group; and (C) an organoalkoxysilane represented by R³ₐSi(OR⁴)₄₋ₐ and/or a partial hydrolytic condensate thereof, wherein an amount of (C) is 100 to 10,000 parts by mass relative to 100 parts by mass of a total amount of (A) and (B). This provides a composition that can be a water-absorption inhibitor that can impart an excellent water-absorption inhibiting property to a surface of a structural material.

## Description

### TECHNICAL FIELD

The present invention relates to a composition containing an organoalkoxysilane and/or a partial hydrolytic condensate of the organoalkoxysilane. In addition, the present invention relates to a water-absorption inhibitor obtained from the composition, a method for manufacturing the composition, and an article treated with the water-absorption inhibitor.

### BACKGROUND ART

Inorganic porous materials, woods, synthetic woods, etc., which are used as construction materials and civil engineering structure materials, used for outside structures cause appearance deterioration derived from: deterioration due to exposure to rainfall to absorb water; cracking due to frost damage under low temperature or salt damage near a coast; and adhesion of mold or algae. Thus, a countermeasure to extend a lifetime of the structures has been required.

Examples of the inorganic porous material include concreate, lightweight concreate, autoclaved lightweight concreate (ALC), mortar, various cement plates, gypsum board, calcium silicate plate, brick, roofing tile, tile, and stone. To inhibit the deterioration of these porous materials, woods, synthetic woods, etc., a water-absorption inhibitor is applied and/or permeated with the substrate surface for hydrophobizing a surface layer of the substrate to inhibit permeation of moisture and salinity onto the substrate surface. Known as the water-absorption inhibitor are silicone-based or silane-based compositions.

As the silicone-based or silane-based water-absorption inhibitors, there is conventionally a solvent-type water-absorption inhibitor in which an alkylalkoxysilane compound is diluted with an organic solvent. This water-absorption inhibitor, however, has a low concentration of the alkylalkoxysilane and a low viscosity, and thereby a sufficient amount of the alkylalkoxysilane cannot be permeated with the substrate surface with once application, and a hydrophobic layer with a sufficient thickness cannot be formed on the substrate surface. In addition, the solvent-type water-absorption inhibitor has risks of a fire, explosion, poisoning, etc., and generates a volatile organic compound (VOC) from the organic solvent during the application to cause deterioration of operating environment and an environmental problem. Therefore, there has been a demand for a solvent-free-type water-absorption inhibitor in recent years.

For example, Patent Documents 1 to 4 describe use of an aqueous emulsion composition composed of an alkylalkoxysilane, a surfactant (emulsifier), and water as the water-absorption inhibitor. However, this aqueous emulsion composition leaves the surfactant on the coated substrate surface, and thereby fails to form a sufficiently hydrophobic substrate surface. Thus, there have been a problem of deterioration of appearance due to partial wet color of the substrate surface during rainfall, and a problem of failure to obtain sufficient water repellency.

When the aqueous emulsion is thickly applied on the substrate surface or applied on a vertical surface, the aqueous emulsion has a problem of flowing out. Patent Document 5 describes use of an aqueous cream (paste-like water-containing composition) composed of an alkylalkoxysilane, an emulsifier, and water as the water-absorption inhibitor. However, this water-absorption inhibitor has the cream shape, and consequently has excellent applicability and can be thickly applied on the substrate surface, but the emulsion breaks immediately after the application to cause the alkylalkoxysilane, which has a low viscosity, to be separated. Thus, when the cream is applied on a tilted surface, a vertical surface, or a downward surface, the liquid is dripped to cause the effective component (alkylalkoxysilane) to be flown out, which fails to be sufficiently permeated with the substrate surface.

Further, Patent Document 6 describes a water-absorption inhibitor in which an alkylalkoxysilane and cyclodextrin are dispersed in water. Since this water-absorption inhibitor leaves the cyclodextrin, which is a water-soluble polymer, on the coated substrate surface, there are problems of deterioration of the substrate appearance, failure to obtain sufficient water repellency, etc.

Patent Document 7 describes a water-absorption inhibitor composed of an alkylalkoxysilane and silica. For this water-absorption inhibitor, the white silica is left on the coated surface to deteriorate appearance, and thereby the silica needs to be removed with a brush, etc. When the water-absorption inhibitor is applied in a large area, the removing operation causes large burden.

Patent Document 8 describes a water-absorption inhibitor composed of an alkylalkoxysilane and a thixotropic agent. A commercially available thixotropic agent is commonly dissolved in an organic solvent such as xylene, mineral spirit (mineral terpene), benzyl alcohol, ethanol, and isopropanol, and thereby the water-absorption inhibitor using this thixotropic agent contains the organic solvent. The thixotropic agent itself containing no organic solvent is powder, and it is difficult to be dispersed in the alkylalkoxysilane.

Patent Documents 9 to 11 describe: a composition in which an aluminum dicarboxylate, a fatty acid having 6 to 24 carbon atoms, and an aluminum oligomer and/or an aluminum alkoxide selected from an aluminum oxide organoxide and an aluminum oxide acylate are used in combination to gel an organoalkoxysilane; and a water-absorption inhibitor containing this composition. However, the gel composition described in the Patent Documents, which is a gel easily tore off, are effective for applying methods using a trowel or a spatula, but the gel has too high viscosity to adhere to a brush or a roller, and thereby the gel is unsuitable for applying using a brush or a roller.

Meanwhile, silicones are used also in cosmetic materials. For example, a silicone oil is used as a base oil for compositions in cosmetic use, and in particular, a low-viscosity silicone oil having a dynamic viscosity of 100 mm²/s or less is widely used in cosmetic use such as skin care and makeup because of features such as its excellent extensibility, plainness, and high safety.

However, when the low-viscosity silicone oil is used as a base oil to prepare a low-flowable paste composition, necessarily used as a thickener are: organic materials such as a dextrin fatty acid ester (Patent Documents 12 to 15), a sucrose fatty acid ester (Patent Document 16), trimethylsilylated polyvinyl alcohol or trimethylsilylated polysaccharides (Patent Document 17), and a cellulose ether containing a fatty acid ester group (Patent Document 18); and an organically modified clay mineral (Patent Documents 19 to 21). In addition, the low-viscosity silicone oil is separated or discharged with time, and thereby it is difficult to retain the smooth and uniform composition.

To solve this problem, proposed is a method of using a specific organopolysiloxane as a thickener, and treating the organopolysiloxane with a low-viscosity silicone oil under a shearing force to obtain a uniform paste composition (Patent Document 22).

These thickening, gelling, and pasting techniques in the cosmetic use are limited to use of the silicone oil as the oil agent, and it has been unknown to use the alkoxysilane compound. In addition, use for the water-absorption inhibitor has not been developed.

### CITATION LIST

### PATENT LITERATURE

Patent Document 1: JP S62-197369 A
Patent Document 2: JP H6-313167 A
Patent Document 3: JP H9-208938 A
Patent Document 4: JP 2004-315631 A
Patent Document 5: JP H10-81824 A
Patent Document 6: JP 2009-155641 A
Patent Document 7: JP 2009-35704 A
Patent Document 8: JP 2012-241100 A
Patent Document 9: JP 2014-234398 A
Patent Document 10: JP 2015-78305 A
Patent Document 11: JP 2017-200967 A
Patent Document 12: JP S62-121764 A
Patent Document 13: JP S62-143970 A
Patent Document 14: JP S62-143971 A
Patent Document 15: JP S63-159489 A
Patent Document 16: JP S63-235366 A
Patent Document 17: JP S62-240335 A
Patent Document 18: JP S63-260955 A
Patent Document 19: JP S62-45656 A
Patent Document 20: JP S62-54759 A
Patent Document 21: JP S63-72779 A
Patent Document 22: JP H2-43263 A

### SUMMARY OF INVENTION

### TECHNICAL PROBLEM

The present invention has been made in view of the above circumstances. An object of the present invention is to provide a composition that can be a water-absorption inhibitor that can impart an excellent water-absorption inhibiting property to a surface of a structural material such as a porous material, woods, and synthetic woods. Further, an object of the present invention is to provide a water-absorption inhibitor comprising the composition, a method for imparting a water-absorption inhibiting property by applying the water-absorption inhibitor on a surface of a structural material, and a structural material surface-treated with the water-absorption inhibitor.

### SOLUTION TO PROBLEM

To solve the above problem, the present invention provides an organoalkoxysilane-containing composition comprising:
an addition reaction product between (A) an organohydrogenpolysiloxane and (B) an organopolysiloxane; and
(C) an organoalkoxysilane and/or a partial hydrolytic condensate of the organoalkoxysilane, wherein
an amount of the (C) is 100 to 10,000 parts by mass relative to 100 parts by mass of a total amount of the (A) and the (B),
the (A) is an organohydrogenpolysiloxane comprising a structural unit selected from the group consisting of a SiO₂ unit, a HSiO_{1.5} unit, a R¹SiO_{1.5} unit, a R¹HSiO unit, a R¹₂SiO unit, a R¹₂HSiO_{0.5} unit, and a R¹₃SiO_{0.5} unit, wherein R¹ represents a substituted or unsubstituted monovalent hydrocarbon group except for an aliphatic unsaturated group, and comprising 1.5 or more in average of hydrogen atoms bonded to a silicon atom in a molecule,
the (B) is an organopolysiloxane comprising a structural unit selected from the group consisting of a SiO₂ unit, a R²SiO_{1.5} unit, a R¹SiO_{1.5} unit, a R¹R²SiO unit, a R¹₂SiO unit, a R¹₃SiO_{0.5} unit, and a R²₂R²SiO_{0.5} unit, wherein R¹ represents the same as above and R² represents an alkenyl group, and comprising 1.5 or more in average of alkenyl groups bonded to a silicon atom in a molecule, and
the (C) is an organoalkoxysilane represented by the following formula (1) and/or a partial hydrolytic condensate of the organoalkoxysilane,

   R³ₐSi(OR⁴)₄₋ₐ (1)

   wherein R³ each independently represents a monovalent hydrocarbon group having 1 to 20 carbon atoms and optionally having an amino group, an epoxy group, or a halogen atom; R⁴ each independently represents a monovalent hydrocarbon group having 1 to 8 carbon atoms; and "a" represents 1, 2, or 3.

The organoalkoxysilane-containing composition of the present invention can be the water-absorption inhibitor that can impart an excellent water-absorption inhibiting property to a surface of a structural material such as a porous material, woods, and synthetic woods.

In the present invention, R³ in the formula (1) preferably represents an alkyl group having 4 to 16 carbon atoms, and more preferably an alkyl group having 6 to 12 carbon atoms.

The organoalkoxysilane-containing composition of the present invention can exhibit more excellent water-absorption inhibiting property by containing such a component (C).

In the present invention, the organoalkoxysilane-containing composition preferably has a viscosity at 25°C of 100 to 500,000 mPa·s, the viscosity being measured with a rotary viscosimeter.

Such a composition causes no liquid dripping during application on the structural material to yield good appearance, and causes no unevenness of the water-absorption inhibiting property. Furthermore, operability during application becomes good.

In addition, the present invention provides a water-absorption inhibitor comprising the above organoalkoxysilane-containing composition.

Such a water-absorption inhibitor can impart the excellent water-absorption inhibiting property to the surface of the structural material.

In addition, the present invention provides a method for manufacturing the above organoalkoxysilane-containing composition, the method comprising a first step of stirring and addition-polymerizing 100 parts by mass of a total amount of the component (A) and the component (B) in the presence of 100 to 1500 parts by mass of the component (C) to obtain an addition reaction product.

According to the method for manufacturing the organoalkoxysilane-containing composition of the present invention, the addition reaction product (polymerization product) between the component (A) and the component (B) obtained in the first step is not excessively hard. The reaction rate between the component (A) and the component (B) becomes sufficient to obtain the addition reaction product having a sufficient thickening property.

In this case, the method preferably further comprising a second step of further mixing the component (C) with the addition reaction product so that a total amount of the component (C) is 100 to 10000 parts by mass relative to 100 parts by mass of the total amount of the component (A) and the component (B).

Such a method for manufacturing the organoalkoxysilane-containing composition easily encapsulates the component (C) in a three-dimensional structure of the addition reaction product in dilution in the second step, and the composition having sufficient stability can be efficiently manufactured without decrease in the viscosity due to the dilution.

In addition, the present invention provides a method for imparting a water-absorption inhibiting property, the method comprising a step of applying the above water-absorption inhibitor on a surface of a structural material.

The method for imparting a water-absorption inhibiting property of the present invention can efficiently impart the water-absorption inhibiting property to the surface of the structural material.

In this case, the water-absorption inhibitor is preferably applied by using a spray, spraying, a roller, or a brush where a viscosity at 25°C of the water-absorption inhibitor measured with a rotary viscosimeter is 100 to 50,000 mPa·s, and the water-absorption inhibitor is preferably applied by using a trowel or a spatula where a viscosity at 25°C of the water-absorption inhibitor measured with a rotary viscosimeter is 5,000 to 500,000 mPa·s.

With such a procedure, the water-absorption inhibitor can be efficiently applied on the surface of the structural material.

In addition, the present invention provides a method for manufacturing a surface-treated structural material, the method comprising a step of surface-treating a structural unit with the above water-absorption inhibitor.

With the manufacturing method of the present invention as above, the surface-treated structural material can be efficiently manufactured.

### ADVANTAGEOUS EFFECTS OF INVENTION

The composition of the present invention yields application ease; hardly causes liquid dripping during application; can deeply permeate the effective component (organoalkoxysilane) through the surface of the structural material such as the porous material, woods, and synthetic woods; can impart the water-absorption inhibiting property without deterioration of appearance; yields good operability during application; and yields excellent storage stability, and can retain its properties even when stored in a long term at high temperature.

### DESCRIPTION OF EMBODIMENTS

As noted above, there has been a demand for development of the organoalkoxysilane-containing composition that can be the water-absorption inhibitor that imparts the excellent water-absorption inhibiting property to the surface of the structural material such as the porous material, woods, and synthetic woods. The structural material herein refers to a porous material, woods, synthetic woods, etc. used as construction materials and civil engineering structure materials.

In terms of this point, when the thickening, gelling, and pasting techniques for the silicone oil used in the conventional cosmetic use could be applied for the water-absorption inhibitor composed of the alkylalkoxysilane compound used as the construction material and civil engineering structure material use, it is possible to obtain a novel composition that has excellent applicability and that hardly causes liquid dripping during operation.

Since the common thickener, gelling agent, etc. often have a polar group, and water-repellent performance of the water-absorption inhibitor is often deteriorated even by thickening by using these common materials. However, the above method is promising for thickening, gelling, and pasting without deterioration of the water-repellency.

However, the technique according to the water-absorption inhibitor mainly applied for the construction and civil engineering structural materials and the technique according to the cosmetic material applied mainly for a skin of a living body have absolutely different application targets, and the application as above has not been investigated at all.

The present inventors have made earnest study to achieve the above object, and consequently found that the composition having a specific blending described below yields application ease; causes no liquid dripping during application; can deeply permeate the effective component (organoalkoxysilane) through the surface of the structural material such as the porous material, woods, and synthetic woods; can impart the water-absorption inhibiting property without deterioration of appearance; yields good operability during application; and yields excellent storage stability, and can retain its properties even when stored in a long term at high temperature. This finding has led to the present invention.

Specifically, the present invention is a an organoalkoxysilane-containing composition comprising:
an addition reaction product between (A) an organohydrogenpolysiloxane and (B) an organopolysiloxane; and
(C) an organoalkoxysilane and/or a partial hydrolytic condensate of the organoalkoxysilane, wherein
an amount of the (C) is 100 to 10,000 parts by mass relative to 100 parts by mass of a total amount of the (A) and the (B),
the (A) is an organohydrogenpolysiloxane comprising a structural unit selected from the group consisting of a SiO₂ unit, a HSiO_{1.5} unit, a R¹SiO_{1.5} unit, a R¹HSiO unit, a R¹₂SiO unit, a R¹₂HSiO_{0.5} unit, and a R¹₃SiO_{0.5} unit, wherein R¹ represents a substituted or unsubstituted monovalent hydrocarbon group except for an aliphatic unsaturated group, and comprising 1.5 or more in average of hydrogen atoms bonded to a silicon atom in a molecule,
the (B) is an organopolysiloxane comprising a structural unit selected from the group consisting of a SiO₂ unit, a R²SiO_{1.5} unit, a R¹SiO_{1.5} unit, a R¹R²SiO unit, a R¹₂SiO unit, a R¹₃SiO_{0.5} unit, and a R²₂R²SiO_{0.5} unit, wherein R¹ represents the same as above and R² represents an alkenyl group, and comprising 1.5 or more in average of alkenyl groups bonded to a silicon atom in a molecule, and
the (C) is an organoalkoxysilane represented by the following formula (1) and/or a partial hydrolytic condensate of the organoalkoxysilane,

   R³ₐSi(OR⁴)₄₋ₐ (1)

   wherein R³ each independently represents a monovalent hydrocarbon group having 1 to 20 carbon atoms and optionally having an amino group, an epoxy group, or a halogen atom; R⁴ each independently represents a monovalent hydrocarbon group having 1 to 8 carbon atoms; and "a" represents 1, 2, or 3.

Hereinafter, the present invention will be described in detail, but the present invention is not limited thereto.

### Organoalkoxysilane-Containing Composition

The organoalkoxysilane-containing composition of the present invention comprises: an addition reaction product between (A) a specific organohydrogenpolysiloxane and (B) a specific organopolysiloxane; and (C) a specific organoalkoxysilane and/or a partial hydrolytic condensate of the organoalkoxysilane. The organoalkoxysilane-containing composition may comprise components other than (A) to (C) as necessary. Hereinafter, each of the components will be described in detail.

### (A) Organohydrogenpolysiloxane

The component (A) is a component to yield the addition reaction product to be a base polymer of the organoalkoxysilane-containing composition. The organohydrogenpolysiloxane comprises a structural unit selected from the group consisting of a SiO₂ unit, a HSiO_{1.5} unit, a R¹SiO_{1.5} unit, a R¹HSiO unit, a R¹₂SiO unit, a R¹₂HSiO_{0.5} unit, and a R¹₃SiO_{0.5} unit, wherein R¹ represents a substituted or unsubstituted monovalent hydrocarbon group except for an aliphatic unsaturated group, and comprises 1.5 or more in average of hydrogen atoms bonded to a silicon atom in a molecule.

Examples of the organohydrogenpolysiloxane of the component (A) used in the present invention include organohydrogenpolysiloxanes having a structural unit selected from the group consisting of a HSiO_{1.5} unit, a R¹SiO_{1.5} unit, a R¹HSiO unit, a R¹₂SiO unit, a R¹₂HSiO_{0.5} unit, and a R¹₃SiO_{0.5} unit [wherein R¹ represents a substituted or unsubstituted monovalent hydrocarbon group except for an aliphatic unsaturated group, and examples thereof include: monovalent hydrocarbon groups such as alkyl groups such as methyl, ethyl, propyl, and butyl, aryl groups such as phenyl and tolyl, and cycloalkyl groups such as cyclohexyl; and substituted hydrocarbon groups in which one or two or more hydrogen atoms contained in these monovalent hydrocarbon groups are substituted with halogen atoms such as chlorine, bromine, and fluorine, and a cyano group, for example, a γ-trifluoropropyl group and a chloromethyl group]. This organohydrogenpolysiloxane of the component (A) may be any of linear, branched, or cyclic, but more preferably linear in order to smoothly proceed with the addition polymerization. This organohydrogenpolysiloxane has 1.5 or more, preferably 2 to 25, in average of hydrogen atoms bonded to a silicon atom (Si-H bonds) in one molecule.

A proportion of this hydrogen atom bonded to a silicon atom in the molecule is typically 0.1 to 50 mol%, preferably 0.2 to 30 mol%, and further preferably 0.4 to 10 mol% relative to a total amount of the hydrogen atoms and organic groups bonded to the silicon atom.

The organic group contained in this component (A) (represented as R¹ in the above) may be any, preferably a methyl group, and 50 mol% or more of R¹ are particularly preferably methyl groups.

Representative examples of the organohydrogenpolysiloxane (A) include, but not limited to, organohydrogenpolysiloxane represented by the following formula,

[(CH₃)₃SiO₀.₅]_{b}[(CH₃)₂HSiO_{0.5}]_{c}[(CH₃)₂SiO]_{d}[(CH₃)HSiO]ₑ

wherein "b" and "c" represent an integer satisfying b+c=2; "d" represents an integer of 0 to 500, preferably an integer of 5 to 300, and more preferably an integer of 10 to 200; and "e" represents an integer of 0 to 50, preferably an integer of 0 to 30, and further preferably an integer of 1 to 20. A combination with the alkenyl-group-containing organopolysiloxane (B), described later, can yield a sufficient thickening property. A mixture of these may also be suitably used for the present invention.

More specific examples of the component (A) include, but not limited to, compounds represented by the following formulae.

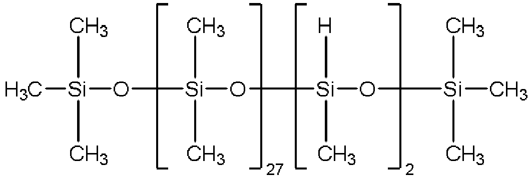

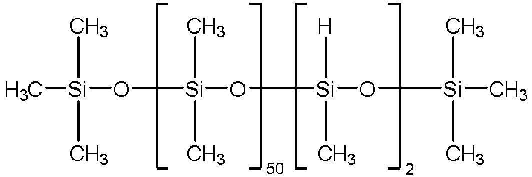

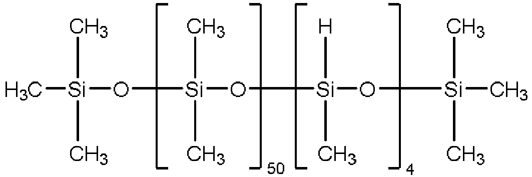

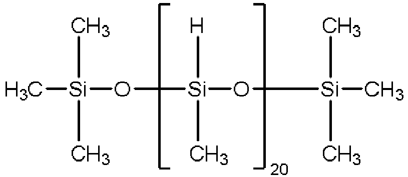

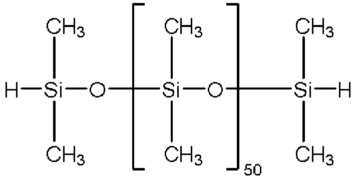

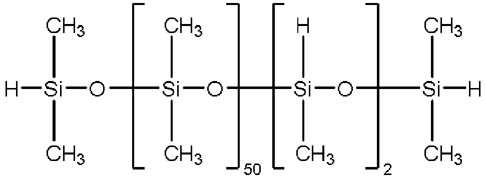

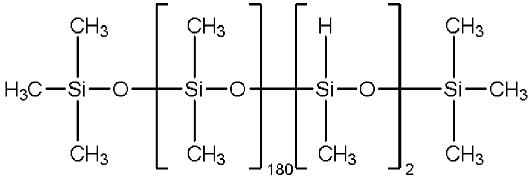

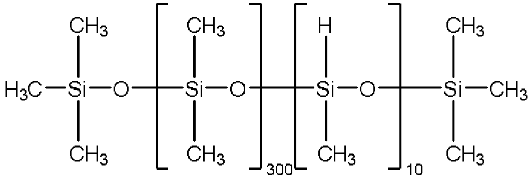

### (B) Organopolysiloxane

The organopolysiloxane (B) used in the present invention is an alkenyl-group-containing organopolysiloxane composed of a structural unit selected from the group consisting of a SiO₂ unit, a R²SiO_{1.5} unit, a R¹SiO_{1.5} unit, a R¹R²SiO unit, a R¹₂SiO unit, a R¹₃SiO_{0.5} unit, and R¹₂R²SiO_{0.5} unit (wherein R¹ represents the same as above and R² represents an alkenyl group), and comprising 1.5 or more, preferably 2 to 25, in average of alkenyl groups bonded to a silicon atom in a molecule. This organopolysiloxane (B) may have any of linear, branched, or cyclic molecular structures.

A content of this alkenyl group is, for example, 0.1 to 50 mol%, preferably 0.2 to 30 mol%, and more preferably 0.4 to 10 mol% in organic groups bonded to silicon. Examples of the alkenyl group include vinyl, allyl, butenyl, pentenyl, and hexenyl groups, and a vinyl group is particularly preferable.

A preferable organic group other than the alkenyl group is, for example, a methyl group, etc., and 50 mol% or more of the other organic groups are desirably methyl groups.

Representative examples of the organopolysiloxane (B) include, but not limited to, a methylalkenylpolysiloxane represented by the following formulae:

[(CH₂=CH)(CH₃)₂SiO_{0.5}]_{f}[(CH₃)₃SiO_{0.5}]_{g}[(CH₃)₂SiO]ₕ[(CH₂= CH)CH₃SiO]ᵢ

wherein "f" and "g" represent an integer satisfying f+g=2; "h" represents an integer of 0 or more; and "i" represents an integer of 0 or more, and 3 ≤ f+g+h+i ≤ 1000, and preferably 10 ≤ f+g+h+i ≤ 800; and

[(CH₂=CH)(CH₃)₂SiO_{0.5}]ⱼ[(CH₃)₃SiO_{0.5}]ₖ[(CH₃)₂SiO]ₗ[(CH₂= CH)CH₃SiO]ₘ[(CH₃)SiO_{1.5}]ₙ[(CH₂=CH)SiO_{1.5}]ₒ[SiO₂]ₚ

wherein "j" represents an integer of 0 or more; "k" represents an integer of 0 or more, j+k represents an integer of 2 or more; "l" represents an integer of 0 or more; "m" represents an integer of 0 or more; "n" represents an integer of 0 or more; "o" represents an integer of 0 or more; "p" represents an integer of 0 or more; and 3 ≤ j+k+l+m+n+o+p ≤ 1000, and preferably 10 ≤ j+k+l+m+n+o+p ≤ 800.

A combination with the organohydrogenpolysiloxane (A) can yield a sufficient thickening property. A mixture of these may also be suitably used for the present invention.

More specific examples of the component (B) include, but not limited to, compounds represented by the following formulae. In the following structure, Vi represents a vinyl group, and R⁵ represents a hexenyl group.

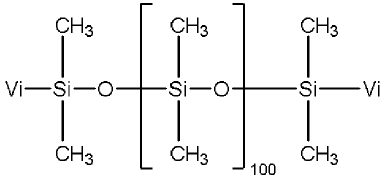

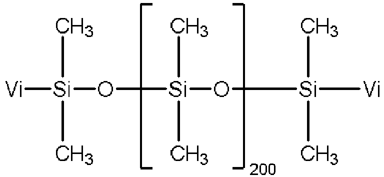

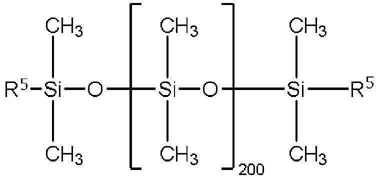

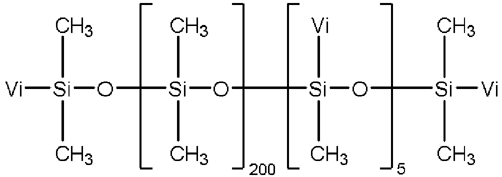

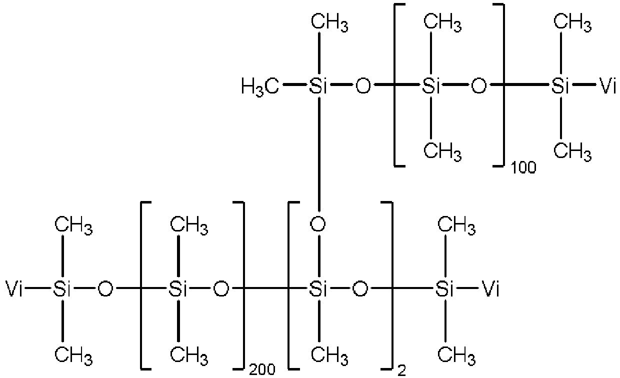

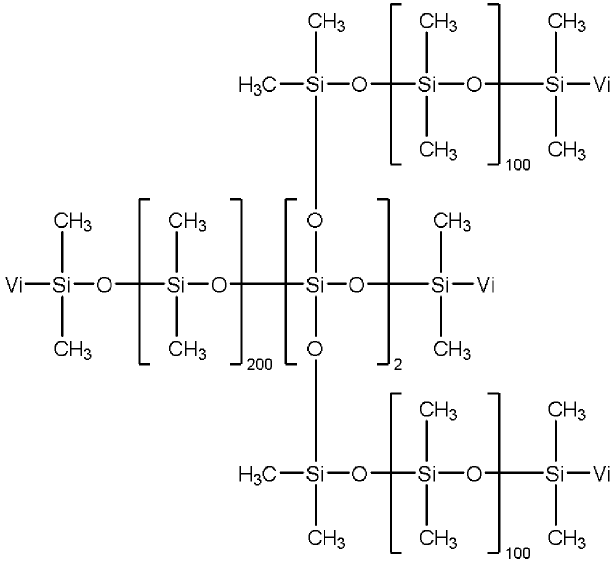

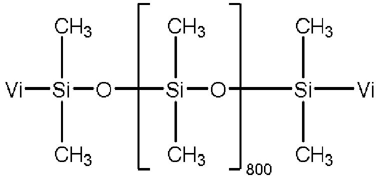

As noted above, the number of the hydrogen atoms bonded to silicon, which are reactive groups of the organohydrogenpolysiloxane (A), and the number of the alkenyl groups bonded to silicon, which are reactive group of the organopolysiloxane (B), in one molecule are each needed to be 1.5 or more in average. If any one of these numbers is less than 1.5, it is difficult to form the three-dimensional structure in the polymer obtained by the addition polymerization to cause a poor effect of thickening the target organoalkoxysilane and/or the partial hydrolytic condensate of the organoalkoxysilane. The contents of these reactive groups are, for example, 0.1 to 50 mol%, preferably 0.2 to 30 mol%, and more preferably 0.4 to 10 mol% in each of the polysiloxane.

With this content of 50 mol% or less, the three-dimensional structure formed by the addition polymerization has an appropriate crosslinking density. Thus, (C) the organoalkoxysilane and/or the partial hydrolytic condensate of the organoalkoxysilane is easily encapsulated in the three-dimensional structure to improve stability and hardly cause bleeding to the surface. With the content of 0.5 mol% or more, the three-dimensional structure is sufficiently formed, and (C) the organoalkoxysilane and/or the partial hydrolytic condensate of the organoalkoxysilane is also encapsulated in the three-dimensional structure. Thus, the addition reaction product is swelled with (C) the organoalkoxysilane and/or the partial hydrolytic condensate of the organoalkoxysilane without dissolution in a case of a relatively large amount of the used component (C) or a case of use together with the component (C) in treating the obtained addition reaction product (polymerization product) under a shearing force, as described later. Therefore, the obtained silicone composition can yield a sufficient thickening property.

In the hydrosilylation reaction between the organohydrogenpolysiloxane (A) and the alkenyl-group-containing organopolysiloxane (B), a mole ratio of all aliphatic unsaturated groups / SiH is not particularly limited, but preferably 1/10 to 10/1, and more preferably 8/10 to 3/1. Within these ranges, amounts of unreacted organohydrogenpolysiloxane (A) or alkenyl-group-containing organopolysiloxane (B) become small to enable to avoid appearance failure due to these unreacted components when applied on the substrate of the structural material such as the porous material, woods, and synthetic woods.

### (C) Organoalkoxysilane and Partial Hydrolytic Condensate Thereof

The (C) organoalkoxysilane and/or the partial hydrolytic condensate of the organoalkoxysilane used in the present invention is represented by the following formula (1).

(C) : R³ₐSi(OR⁴)₄₋ₐ (1)

In the formula (1), R³ each independently represents a monovalent hydrocarbon group having 1 to 20, preferably 4 to 16, and more preferably 6 to 12, carbon atoms and optionally having an amino group, an epoxy group, or a halogen atom. Examples of the monovalent hydrocarbon group include: alkyl groups, such as a methyl group, an ethyl group, a propyl group, an isopropyl group, a butyl group, an isobutyl group, a tert-butyl group, a pentyl group, an isopentyl group, a neopentyl group, a hexyl group, a cyclohexyl group, an octyl group, an isooctyl group (an alkyl group having 8 carbon atoms including 2,4,4-trimethylpentyl group), a decyl group, a dodecyl group, and a norbornyl group; alkenyl groups, such as a vinyl group, an allyl group, and a hexenyl group; aryl groups, such as a phenyl group; and aralkyl groups, such as a styryl group. The group represented by R³ may be any of a linear, branched, or cyclic group. Examples thereof further include: amino-group-containing alkyl groups, such as a 3-aminopropyl group and an N-(2-aminoethyl)-3-aminopropyl group; epoxy-group-containing alkyl groups, such as a 3-glycidoxypropyl group; and fluorine-containing groups, such as a trifluoromethyl group and a 3,3,3-trifluoropropyl group. Among these, alkyl groups having 4 to 16 carbon atoms are preferable, and alkyl groups having 6 to 12 carbon atoms are further preferable.

R⁴ each independently represents a monovalent hydrocarbon group having 1 to 8, preferably 1 to 6, and further preferably 1 to 4 carbon atoms. Examples of the monovalent hydrocarbon group include alkyl groups, such as a methyl group, an ethyl group, a propyl group, an isopropyl group, a butyl group, a pentyl group, and a hexyl group. Among these, a methyl group and an ethyl group are particularly preferable. "a" represents 1, 2, or 3, and particularly preferably 1.

Examples of the above organoalkoxysilane include trimethylmethoxysilane, trimethylethoxysilane, dimethyldimethoxysilane, dimethyldiethoxysilane, methyltrimethoxysilane, methyltriethoxysilane, ethyltrimethoxysilane, ethyltriethoxysilane, propyltrimethoxysilane, propyltriethoxysilane, butyltrimethoxysilane, butyltriethoxysilane, hexyltrimethoxysilane, hexyltriethoxysilane, octyltrimethoxysilane, octyltriethoxysilane, isooctyltrimethoxysilane, isooctyltriethoxysilane, 2-ethylhexyltrimethoxysilane, 2-ethylhexyltriethoxysilane, decyltrimethoxysilane, decyltriethoxysilane, phenyltrimethoxysilane, phenyltriethoxysilane, vinyltrimethoxysilane, vinyltriethoxysilane, N-(2-aminoethyl)-3-aminopropyltrimethoxysilane, N-(2-aminoethyl)-3-aminopropyltriethoxysilane, N-(2-aminoethyl)-3-aminopropylmethyldimethoxysilane, N-(2-aminoethyl)-3-aminopropylmethyldiethoxysilane, 3-glycidoxypropyltrimethoxysilane, 3-glycidoxypropyltriethoxysilane, 3-glycidoxypropylmethyldimethoxysilane, 3-glycidoxypropylmethyldiethoxysilane, trifluoromethyltrimethoxysilane, and 3,3,3-trifluoropropyltrimethoxysilane. Among these, methyltriethoxysilane, butyltriethoxysilane, propyltriethoxysilane, hexyltrimethoxysilane, hexyltriethoxysilane, octyltrimethoxysilane, octyltriethoxysilane, isooctyltrimethoxysilane, and isooctyltriethoxysilane are preferable, and hexyltrimethoxysilane, hexyltriethoxysilane, octyltrimethoxysilane, octyltriethoxysilane, isooctyltrimethoxysilane, and isooctyltriethoxysilane are further preferable. The organoalkoxysilane may be used singly, or may be a mixture of two or more thereof.

As the component (C) of the present invention, a hydrolytic condensate obtained by hydrolyzing a part of the alkoxy groups contained in the organoalkoxysilane and performing an intermolecular condensation reaction may also be used. The organoalkoxysilane and the hydrolytic condensate of the organoalkoxysilane may be mixed for use. For this hydrolytic condensation, a conventionally known method may be used.

Examples of a catalyst for the hydrolytic condensation include: acids, such as hydrochloric acid, nitric acid, acetic acid, and maleic acid; bases, such as alkali metal hydroxides such as NaOH and KOH, amine compounds such as ammonia and a salt thereof, triethylamine, dibutylamine, hexylamine, and octylamine, salts of the amine compounds, quaternary ammonium salts such as benzyltriethylammonium chloride, tetramethylammonium hydroxide, and tetrabutylammonium hydroxide; fluoride salts, such as potassium fluoride and sodium fluoride; solid acidic catalysts or solid basic catalysts (such as ion-exchanging resin catalysts); organometal compounds, such as metal salts of organic carboxylic acids such as iron 2-ethylhexoate, titanium naphthate, zinc stearate, and dibutyltin diacetate, organotitanium esters such as tetrabutoxytitanium and dibutoxytitanium (bis-2,4-pentanedionate), organozirconium esters such as tetrabutoxyzirconium and dibutoxyzirconium (bis-2,4-pentanedionate), alkoxyaluminum compounds such as aluminum triisopropoxide, and aluminum chelate compounds such as aluminum acetylacetonate complex; and aminoalkyl-substituted alkoxysilanes, such as 3-aminopropyltrimethoxysilane and N-(β-aminoethyl)-3-aminopropyltrimethoxysilane. These may be used singly, or mixed for use.

### Method for Manufacturing Organoalkoxysilane-Containing Composition

A method for manufacturing the organoalkoxysilane-containing composition of the present invention is not particularly limited, and examples thereof include a method for manufacturing a composition comprising a first step of stirring and addition-polymerizing 100 parts by mass of a total amount of the component (A) and the component (B) in the presence of 100 to 1500 parts by mass of the component (C) to obtain an addition reaction product. The above manufacturing method may further comprise a second step of further mixing the component (C) with the addition reaction product into 100 parts by mass of the total amount of the component (A) and the component (B) so that a total amount of the component (C) is 100 to 10000 parts by mass. Such a one-step or two-step process can yield the organoalkoxysilane-containing composition containing: the addition reaction product between (A) and (B); and (C). An additive described later may be added at any time in the manufacturing process as necessary. Hereinafter, the method for manufacturing the composition will be described.

The manufacture of the composition of the present invention can be performed by: as the first step, stirring and addition-polymerizing the organohydrogenpolysiloxane (A) and the organopolysiloxane (B) in the presence of the organoalkoxysilane and/or the hydrolytic condensate of the organoalkoxysilane (C) to obtain the addition reaction product between (A) and (B); and as the second step, diluting the addition reaction product with the organoalkoxysilane and/or the partial hydrolytic condensate of the organoalkoxysilane (C) until a desired concentration. In this time, a proportion of the organoalkoxysilane and/or the hydrolytic condensate of the organoalkoxysilane (C) in the addition polymerization of the first step is within a range of 100 to 1,500 parts by mass, preferably a range of 150 to 1,300 parts by mass, and more preferably a range of 200 to 1,000 parts by mass relative to 100 parts by mass of the total amount of the organohydrogenpolysiloxane (A) and the organopolysiloxane (B).

When the proportion of the organoalkoxysilane and/or the hydrolytic condensate of the organoalkoxysilane is 100 parts by mass or more, the polymerized product (addition reaction product between the component (A) and the component (B)) obtained in the first step does not become excessively hard, and in dilution in the second step, the organoalkoxysilane and/or the hydrolytic condensate of the organoalkoxysilane (C) is easily encapsulated in the three-dimensional structure of the addition reaction product. As a result, decrease in the viscosity due to the dilution does not occur, and sufficient stability without easy separation is yielded.

When the proportion of the organoalkoxysilane and/or the partial hydrolytic condensate of the organoalkoxysilane (C) is 1,500 parts by mass or less, the reaction rate between the organohydrogenpolysiloxane (A) and the organopolysiloxane (B) becomes sufficient to yield the addition reaction product having a sufficient thickening property.

The addition polymerization is performed in the presence of a platinum compound (for example, chloroplatinic acid, alcohol-modified chloroplatinic acid, chloroplatinic acid-vinylsiloxane complex, etc.) or a rhodium compound. These compounds are soluble in an organic solvent such as, for example: aliphatic alcohols, such as methanol, ethanol, 2-propanol, and butanol; aromatic hydrocarbons, such as benzene, toluene, and xylene; aliphatic or alicyclic hydrocarbons, such as n-pentane, n-hexane, and cyclohexane; and halogenated hydrocarbons, such as dichloromethane, chloroform, carbon tetrachloride, trichloroethane, trichloroethylene, and a fluorochlorohydrocarbon.

Particularly preferable examples of the catalysts include: chloroplatinic acid; and platinum compounds used for a hydrosilylation reaction, described in US 3,159,601 B, US 3,159,662 B, and US 3,775,452 B, for example [Pt(PPh₃)₃]. These catalysts are preferably, for example, a complex compound between vinylsiloxane and the platinum compound, and further preferably an alcohol-modified product thereof. Among these, chloroplatinic acid described in JP S33-9969 B, a complex compound between vinylsiloxane and chloroplatinic acid, and a complex compound between vinylsiloxane and platinum are more preferable.

A specific procedure of the addition polymerization is as follows, for example. A predetermined amount of each of the organopolysiloxanes (A), (B), and (C) is blended by using a reaction vessel having an appropriate stirring apparatus, such as a planetary mixer, the catalyst is further added, and the mixture is stirred at a temperature of 50 to 150°C, preferably 55 to 140°C, and further preferably 60 to 120°C for 10 minutes to 24 hours, preferably 30 minutes to 12 hours, and more preferably 1 to 8 hours. This procedure easily yields the addition reaction product in a state where the polymer (addition reaction product) having a property of insolubility in the organoalkoxysilane and/or the partial hydrolytic condensate of the organoalkoxysilane (C) but sufficiently swelling therewith encapsulates the organoalkoxysilane and/or the partial hydrolytic condensate of the organoalkoxysilane (C) present together inside the polymer. The reaction temperature and the reaction time are not limited to the above, and may be optimal conditions depending on a scale, a type of the reaction vessel, and the type and blending amounts of (A), (B), and (C) in the addition polymerization.

For manufacturing the composition of the present invention, the organopolysiloxane polymer (addition reaction product) in which the organohydrogenpolysiloxane (A) and the following organopolysiloxane (B) are subjected to the addition reaction product, and the organoalkoxysilane and/or the partial hydrolytic condensate of the organoalkoxysilane (C) may be mixed with a common stirring apparatus, but preferably further kneaded under a shearing force. This is because the organopolysiloxane polymer in which the organohydrogenpolysiloxane (A) and the following organopolysiloxane (B) are subjected to the addition reaction product has the three-dimensional crosslinked structure insoluble in the organoalkoxysilane and/or the partial hydrolytic condensate of the organoalkoxysilane (C), and imparting sufficient dispersibility under the shearing force yields the paste composition with smooth appearance. The kneading treatment may be performed with, for example, a three-roller mill, a two-roller mill, a kneader, a masscolloider, a sand grinder, a colloid mill, a Gaulin homogenizer, a disper, a high-shear mixer, etc., and a method with the three-roller mill or the disper is preferable.

### Additive

The composition of the present invention may further contain other additives. As the additive, known additives used for a water-absorption inhibitor may be used. Examples thereof include an antifungal agent, an antialgal agent, an ultraviolet-ray absorber, an antiaging agent, a pigment, a dye, a viscosity regulator such as a thickener, a solvent, a wax, and a metal soup except for aluminum soup. Furthermore, inorganic fillers such as silica, alumina, titania, mica, and talc, inorganic thickeners such as montmorillonite and bentonite, etc. may be blended. When the additive is a solid such as silica, alumina, titania, mica, talc, montmorillonite, and bentonite, the solid may remain on the substrate surface to cause appearance failure when the composition is applied and dried on the substrate. Thus, an amount of the additive is 20 parts by mass or less, preferably 10 parts by mass or less, and more preferably 4 parts by mass or less relative to 100 parts by mass of the final organoalkoxysilane and/or the partial hydrolytic condensate of the organoalkoxysilane (C) .

For a purpose of regulating the viscosity, the viscosity regulator such as hydrocarbon compounds, paraffins, and silicone may be added into the composition of the present invention. Although solvents having a boiling point or a flash point lower than that of the organoalkoxysilane may be added, a compound having a boiling point or a flash point higher than that of the organoalkoxysilane is preferably added. Since the organoalkoxysilane and/or the partial hydrolytic condensate of the organoalkoxysilane (C) permeates with the inside when applied on the substrate surface such as the porous material, woods, and synthetic woods, selecting a component to easily permeate these substrates can yield preferable appearance.

As for the properties of the composition of the present invention, a gel composition refers to a solid at 25°C, a paste composition refers to a low-flowable liquid, and a liquid composition refers to a high-flowable liquid, and all the compositions with these properties can be applied on the substrate with a roller, a brush, a trowel, a spatula, a spray, spraying, etc.

The viscosity of the composition of the present invention is preferably within a range of 100 to 500,000 mPa·s, and further preferably a range of 500 to 300,000 mPa·s. With the viscosity of 100 mPa·s or more, no liquid dripping occurs when the composition is applied on the structural material such as the porous material, woods, and synthetic woods, the appearance becomes good, and the permeation depth of the organoalkoxysilane into the substrate does not depend on the place. Thus, there is no risk of unevenness of the water-absorption inhibiting property. With the viscosity of 500,000 mPa·s or less, operability during the application becomes good.

The viscosity in the present invention refers to a value measured on the composition at a temperature of 25°C with a rotary viscosimeter, unless otherwise mentioned. A rotor, a number of rotation, and rotation time are appropriately selected based on a common method (for example, JIS K 7117-1:1999) depending on the viscosity.

### Water-Absorption Inhibitor

The composition of the present invention can be used as a water-absorption inhibitor. Applying this water-absorption inhibitor on the surface of the structural material such as the porous material, woods, and synthetic woods can impart the water-absorption inhibiting property to the substrate surface. Examples of the substrate (structural material) to be an applying target of the water-absorption inhibitor include inorganic porous materials such as concreate, lightweight concreate, autoclaved lightweight concreate (ALC), mortar, various cement plates, gypsum board, calcium silicate plate, brick, roofing tile, tile, and stone. The water-absorption inhibitor may also be used for a wall mainly containing diatomaceous earth, clay, plaster, etc., and organic porous materials such as paper, wood, and leather.

An amount of the water-absorption inhibitor of the present invention to be applied on the substrate is not particularly limited, and may be, for example, 5 to 1,000 g/m² and is preferably 10 to 300 g/m². The amount of 5 g/m² or more can sufficiently exhibit the water-absorption inhibiting property. The amount of 1,000 g/m² or less can yield sufficient permeation depth, and the drying time does not become excessively long.

### Method for Imparting Water-Absorption Inhibiting Property

As noted above, the water-absorption inhibiting property can be imparted by applying the water-absorption inhibitor of the present invention on the surface of the structural material.

A method for applying the water-absorption inhibitor of the present invention on the substrate (structural material) is not particularly limited, and may be according to a conventionally known method. For example, a roller, a brush, a trowel, a spatula, a spray, spraying, etc. may be used. The predetermined amount of the water-absorption inhibitor can be typically applied once, but the water-absorption inhibitor may be applied again as necessary. The drying after the application may be leaving to stand at normal temperature, or the coating may be heated to approximately 40 to 80°C.

Applying the water-absorption inhibitor of the present invention by using a spray, spraying, a roller, or a brush where a viscosity at 25°C of the water-absorption inhibitor measured with a rotary viscosimeter is 100 to 50,000 mPa·s, and applying the water-absorption inhibitor by using a trowel or a spatula where the viscosity of the water-absorption inhibitor is 5,000 to 500,000 mPa·s yield good operability. When the viscosity is within a range of 5,000 to 50,000 mPa·s, the water-absorption inhibitor can be applied by using any of the above means with good operability.

### Surface-Treated Structural Material

A surface-treated structural material can be manufactured by surface-treating the structural material with the water-absorption inhibitor of the present invention.

Use of the water-absorption inhibitor containing the composition containing the organoalkoxysilane of the present invention yields application ease; hardly causes liquid dripping during application; can deeply permeate the effective component (organoalkoxysilane) through the surface of the porous material, woods, synthetic woods, etc.; can impart the water-absorption inhibiting property without deterioration of appearance; yields good operability during application; and yields excellent storage stability, and can retain its properties even when stored in a long term at high temperature. Therefore, such a surface-treated structural material can be efficiently manufactured.

Although applying the organoalkoxysilane-containing composition of the present invention on the substrate surface enables the water-repellent component (C) (effective component) to permeate the substrate surface to make the surface layer hydrophobic, the effective component is stably encapsulated in the three-dimensional structure of the non-volatile addition reaction product between the component (A) and the component (B) in the composition (water-absorption inhibitor) of the present invention, which differs from the conventional solvent-type water-absorption inhibitor. Therefore, the effective component can sufficiently permeate the surface of the substrate.

### EXAMPLE

Hereinafter, the present invention will be more specifically described with showing Examples and Comparative Examples, but the present invention is not limited to the following Examples and Comparative Examples.

Note that a rotary viscosity (absolute viscosity) of compositions obtained in the Examples and Comparative Examples in the present invention refers to a value measured on the composition at a temperature of 25°C with a rotary viscosimeter. A rotor, a number of rotation, and rotation time are selected based on JIS K 7117-1:1999 depending on the viscosity. A dynamic viscosity refers to a value at 25°C in a case of using a Cannon-Fenske viscosimeter described in JIS Z8803:2011.

### Example 1

Into a reaction vessel, 13.2 parts by mass of an organohydrogenpolysiloxane (A-1) represented by the following average composition formula (2), 86.8 parts by mass of an organopolysiloxane (B-1) represented by the following average composition formula (3), 100 parts by mass of octyltriethoxysilane, and 0.10 part by mass of a 3-mass% ethanol solution of chloroplatinic acid were added, and the mixture was stirred with keeping an internal temperature of 75 to 85°C for 2 hours to obtain a crosslinked organopolysiloxane polymer swelled with octyltriethoxysilane. Thereafter, the polymer was kneaded with three rollers under a shearing force. Then, 100 parts by mass of octyltriethoxysilane was further added, and the mixture was mixed with a disper mixer under a shearing force to obtain a paste composition having a rotary viscosity at 25°C of 123,200 mPa·s.

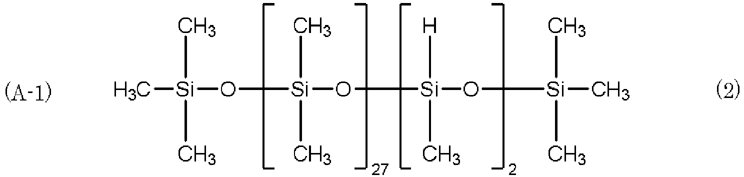

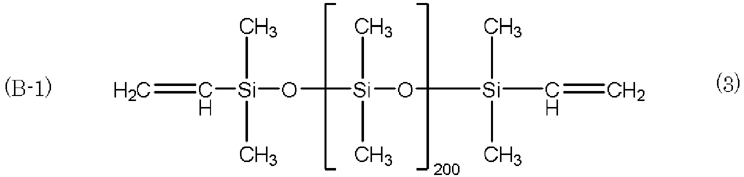

### Example 2

Into a reaction vessel, 13.2 parts by mass of an organohydrogenpolysiloxane (A-1) represented by the average composition formula (2), 86.8 parts by mass of an organopolysiloxane (B-1) represented by the average composition formula (3), 400 parts by mass of octyltriethoxysilane, and 0.10 part by mass of a 3-mass% ethanol solution of chloroplatinic acid were added, and the mixture was stirred with keeping an internal temperature of 75 to 85°C for 2 hours to obtain a crosslinked organopolysiloxane polymer swelled with octyltriethoxysilane. Thereafter, the polymer was kneaded with three rollers under a shearing force. Then, 9,500 parts by mass of octyltriethoxysilane was further added, and the mixture was mixed with a disper mixer under a shearing force to obtain a liquid composition having a rotary viscosity at 25°C of 700 mPa·s.

### Example 3

Into a reaction vessel, 13.2 parts by mass of an organohydrogenpolysiloxane (A-1) represented by the average composition formula (2), 86.8 parts by mass of an organopolysiloxane (B-1) represented by the average composition formula (3), 400 parts by mass of octyltriethoxysilane, and 0.10 part by mass of a 3-mass% ethanol solution of chloroplatinic acid were added, and the mixture was stirred with keeping an internal temperature of 75 to 85°C for 2 hours to obtain a crosslinked organopolysiloxane polymer swelled with octyltriethoxysilane. Thereafter, the polymer was kneaded with three rollers under a shearing force. Then, 1,500 parts by mass of octyltriethoxysilane was further added, and the mixture was mixed with a disper mixer under a shearing force to obtain a liquid composition having a rotary viscosity at 25°C of 2,790 mPa·s.

### Example 4

Into a reaction vessel, 13.2 parts by mass of an organohydrogenpolysiloxane (A-1) represented by the average composition formula (2), 86.8 parts by mass of an organopolysiloxane (B-1) represented by the average composition formula (3), 400 parts by mass of octyltriethoxysilane, and 0.10 part by mass of a 3-mass% ethanol solution of chloroplatinic acid were added, and the mixture was stirred with keeping an internal temperature of 75 to 85°C for 2 hours to obtain a crosslinked organopolysiloxane polymer swelled with octyltriethoxysilane. Thereafter, the polymer was kneaded with three rollers under a shearing force. Then, 500 parts by mass of octyltriethoxysilane was further added, and the mixture was mixed with a disper mixer under a shearing force to obtain a paste composition having a rotary viscosity at 25°C of 34,700 mPa·s.

### Example 5

Into a reaction vessel, 13.2 parts by mass of an organohydrogenpolysiloxane (A-1) represented by the average composition formula (2), 86.8 parts by mass of an organopolysiloxane (B-1) represented by the average composition formula (3), 400 parts by mass of octyltriethoxysilane, and 0.10 part by mass of a 3-mass% ethanol solution of chloroplatinic acid were added, and the mixture was stirred with keeping an internal temperature of 75 to 85°C for 2 hours to obtain a crosslinked organopolysiloxane polymer swelled with octyltriethoxysilane. Thereafter, the polymer was kneaded with three rollers under a shearing force. Then, 166.6 parts by mass of octyltriethoxysilane was further added, and the mixture was mixed with a disper mixer under a shearing force to obtain a paste composition having a rotary viscosity at 25°C of 88,100 mPa.s.

### Example 6

Into a reaction vessel, 21.0 parts by mass of an organohydrogenpolysiloxane (A-2) represented by the following average composition formula (4), 79.0 parts by mass of an organopolysiloxane (B-1) represented by the average composition formula (3), 400 parts by mass of octyltriethoxysilane, and 0.10 part by mass of a 3-mass% ethanol solution of chloroplatinic acid were added, and the mixture was stirred with keeping an internal temperature of 75 to 85°C for 2 hours to obtain a crosslinked organopolysiloxane polymer swelled with octyltriethoxysilane. Thereafter, the polymer was kneaded with three rollers under a shearing force. Then, 1,500 parts by mass of octyltriethoxysilane was further added, and the mixture was mixed with a disper mixer under a shearing force to obtain a liquid composition having a rotary viscosity at 25°C of 2,680 mPa·s.

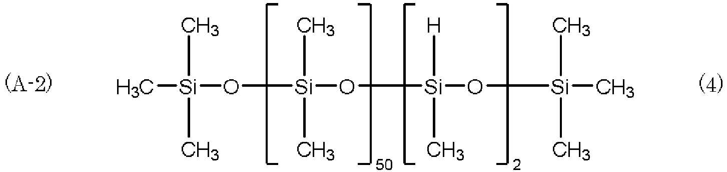

### Example 7

Into a reaction vessel, 15.2 parts by mass of an organohydrogenpolysiloxane (A-1) represented by the average composition formula (2), 84.8 parts by mass of an organopolysiloxane (B-2) represented by the following average composition formula (5), 400 parts by mass of octyltriethoxysilane, and 0.10 part by mass of a 3-mass% ethanol solution of chloroplatinic acid were added, and the mixture was stirred with keeping an internal temperature of 75 to 85°C for 2 hours to obtain a crosslinked organopolysiloxane polymer swelled with octyltriethoxysilane. Thereafter, the polymer was kneaded with three rollers under a shearing force. Then, 1,500 parts by mass of octyltriethoxysilane was further added, and the mixture was mixed with a disper mixer under a shearing force to obtain a liquid composition having a rotary viscosity at 25°C of 3,500 mPa·s.

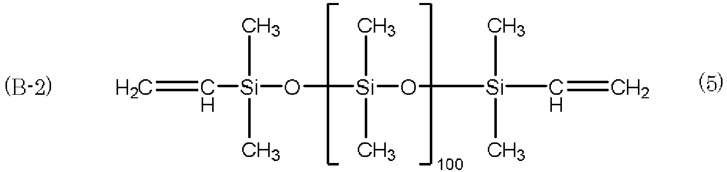

### Example 8

Into a reaction vessel, 13.2 parts by mass of an organohydrogenpolysiloxane (A-1) represented by the average composition formula (2), 86.8 parts by mass of an organopolysiloxane (B-1) represented by the average composition formula (3), 100 parts by mass of octyltriethoxysilane, and 0.10 part by mass of a 3-mass% ethanol solution of chloroplatinic acid were added, and the mixture was stirred with keeping an internal temperature of 75 to 85°C for 2 hours to obtain a crosslinked organopolysiloxane polymer swelled with octyltriethoxysilane. Thereafter, the polymer was kneaded with three rollers under a shearing force. Then, 50 parts by mass of octyltriethoxysilane was further added, and the mixture was mixed with a disper mixer under a shearing force to obtain a paste composition having a rotary viscosity at 25°C of 186,200 mPa·s.

### Example 9

Into a reaction vessel, 13.2 parts by mass of an organohydrogenpolysiloxane (A-1) represented by the average composition formula (2), 86.8 parts by mass of an organopolysiloxane (B-1) represented by the average composition formula (3), 1,500 parts by mass of octyltriethoxysilane, and 0.10 part by mass of a 3-mass% ethanol solution of chloroplatinic acid were added, and the mixture was stirred with keeping an internal temperature of 75 to 85°C for 2 hours to obtain a crosslinked organopolysiloxane polymer swelled with octyltriethoxysilane. Thereafter, the polymer was kneaded with three rollers under a shearing force. Then, 400 parts by mass of octyltriethoxysilane was further added, and the mixture was mixed with a disper mixer under a shearing force to obtain a liquid composition having a rotary viscosity at 25°C of 1,060 mPa·s.

### Example 10

Into a reaction vessel, 13.2 parts by mass of an organohydrogenpolysiloxane (A-1) represented by the average composition formula (2), 86.8 parts by mass of an organopolysiloxane (B-1) represented by the average composition formula (3), 400 parts by mass of octyltriethoxysilane, and 0.10 part by mass of a 3-mass% ethanol solution of chloroplatinic acid were added, and the mixture was stirred with keeping an internal temperature of 75 to 85°C for 2 hours to obtain a crosslinked organopolysiloxane polymer swelled with octyltriethoxysilane. Thereafter, the polymer was kneaded with three rollers under a shearing force. Then, 1,500 parts by mass of octyltriethoxysilane and 76 parts by mass of hydrophobic dry silica were further added, and the mixture was mixed with a disper mixer under a shearing force to obtain a liquid composition having a rotary viscosity at 25°C of 1,320 mPa·s. As the hydrophobic dry silica, AEROSIL RY300 (manufactured by NIPPON AEROSIL CO., LTD.) was used.

### Example 11

Into a reaction vessel, 13.2 parts by mass of an organohydrogenpolysiloxane (A-1) represented by the average composition formula (2), 86.8 parts by mass of an organopolysiloxane (B-1) represented by the average composition formula (3), 400 parts by mass of octyltriethoxysilane, and 0.10 part by mass of a 3-mass% ethanol solution of chloroplatinic acid were added, and the mixture was stirred with keeping an internal temperature of 75 to 85°C for 2 hours to obtain a crosslinked organopolysiloxane polymer swelled with octyltriethoxysilane. Thereafter, the polymer was kneaded with three rollers under a shearing force. Then, 1,500 parts by mass of octyltriethoxysilane and 300 parts by mass of polydimethylsiloxane having a dynamic viscosity at 25°C of 1,000 mm²/g were further added, and the mixture was mixed with a disper mixer under a shearing force to obtain a liquid composition having a rotary viscosity at 25°C of 3,600 mPa·s.

### Comparative Example 1

In the Comparative Example 1, octyltriethoxysilane was singly used in the following evaluation method.

A dynamic viscosity at 25°C of octyltriethoxysilane was 2.1 mm²/g.

### Comparative Example 2

Into a reaction vessel, 13.2 parts by mass of an organohydrogenpolysiloxane (A-1) represented by the average composition formula (2), 86.8 parts by mass of an organopolysiloxane (B-1) represented by the average composition formula (3), 80 parts by mass of octyltriethoxysilane, and 0.10 part by mass of a 3-mass% ethanol solution of chloroplatinic acid were added, the mixture was stirred with keeping an internal temperature of 75 to 85°C for 2 hours, and then the mixture was kneaded with three rollers under a shearing force to obtain a gel composition. However, the gel composition was too hard to measure the viscosity.

### Comparative Example 3

Into a reaction vessel, 13.2 parts by mass of an organohydrogenpolysiloxane (A-1) represented by the average composition formula (2), 86.8 parts by mass of an organopolysiloxane (B-1) represented by the average composition formula (3), 60 parts by mass of octyltriethoxysilane, and 0.10 part by mass of a 3-mass% ethanol solution of chloroplatinic acid were added, and the mixture was stirred with keeping an internal temperature of 75 to 85°C for 2 hours to obtain a crosslinked organopolysiloxane polymer swelled with octyltriethoxysilane. Thereafter, the polymer was kneaded with three rollers under a shearing force. Then, 20 parts by mass of octyltriethoxysilane was further added, and the mixture was mixed with a disper mixer under a shearing force to obtain a gel composition. However, the gel composition was too hard to measure the viscosity.

### Comparative Example 4

Into a reaction vessel, 13.2 parts by mass of an organohydrogenpolysiloxane (A-1) represented by the average composition formula (2), 86.8 parts by mass of an organopolysiloxane (B-1) represented by the average composition formula (3), 12,000 parts by mass of octyltriethoxysilane, and 0.10 part by mass of a 3-mass% ethanol solution of chloroplatinic acid were added, and the mixture was stirred with keeping an internal temperature of 75 to 85°C for 2 hours to obtain a crosslinked organopolysiloxane polymer swelled with octyltriethoxysilane. Thereafter, the polymer was kneaded with three rollers under a shearing force. Then, 20 parts by mass of octyltriethoxysilane was further added, and the mixture was mixed with a disper mixer under a shearing force to obtain a composition having a dynamic viscosity at 25°C of 3.9 mm²/s.

### Evaluations

The evaluation methods for each of the compositions obtained in Examples and Comparative Examples was as follows.

### (1) Liquid Dripping

As a specimen, a mortar test piece (length: 70 mm × width: 70 mm × height: 25 mm) produced in accordance with JIS R5201 was used. On a surface having length: 70 mm × width: 70 mm of this test piece, each of the compositions obtained in Examples and Comparative Examples was mounted so that the amount was 200 g/m², and the composition was applied by using a brush or a spatula so that the coating was as uniform as possible. Immediately after the application, the test piece was left to stand so that the coated surface was vertical, and whether the applied organoalkoxysilane-containing composition was dripped or not was visually checked.

### (2) Appearance

Each of the compositions obtained in Examples and Comparative Examples was applied on a mortar test piece in the same manner as in the (1). This test piece was left to stand at 25°C and 50%RH for seven days to be aged. Thereafter, a proportion of wet color remained on the surface coated with the organoalkoxysilane-containing composition was visually observed and evaluated with the following criteria.

### (Criteria)

5: An area of the portion with remained wet color was 5% or less in an entire area of the coated surface (that is, the specimen had appearance similar to appearance of the test piece not coated with the organoalkoxysilane-containing composition).

4: An area of the portion with remained wet color was more than 5% and less than 25% in an entire area of the coated surface.

3: An area of the portion with remained wet color was 25% or more and less than 75% in an entire area of the coated surface.

2: An area of the portion with remained wet color was 75% or more and less than 95% in an entire area of the coated surface.

1: An area of the portion with remained wet color was 95% or more in an entire area of the coated surface.

### (3) Water Repellency

Each of the compositions was applied on a mortar test piece in the same manner as in the (1). This test piece was left to stand at 25°C and 50%RH for seven days to be aged. Water was showered on the surface coated with each of the compositions for 5 minutes, and then a degree of water repellency and a proportion of wet color on the surface coated with each of the compositions were visually observed and evaluated with the following criteria.

### <Repellency>

5: An area of the water-repelled portion was 95% or more in an entire area of the coated surface.

4: An area of the water-repelled portion was 75% or more and less than 95% in an entire area of the coated surface.

3: An area of the water-repelled portion was 25% or more and less than 75% in an entire area of the coated surface.

2: An area of the water-repelled portion was 5% or more and less than 25% in an entire area of the coated surface.

1: An area of the water-repelled portion was less than 5% in an entire area of the coated surface.

### <Wet Color>

5: An area of the portion with remained wet color was 5% or less in an entire area of the coated surface.

4: An area of the portion with remained wet color was more than 5% and less than 25% in an entire area of the coated surface.

3: An area of the portion with remained wet color was 25% or more and less than 75% in an entire area of the coated surface.

2: An area of the portion with remained wet color was 75% or more and less than 95% in an entire area of the coated surface.

1: An area of the portion with remained wet color was 95% or more in an entire area of the coated surface.

### (4) Permeation Depth

Each of the compositions was applied on a mortar test piece in the same manner as in the (1). This test piece was left to stand at 25°C and 50%RH for seven days to be aged. The test piece was vertically cleaved so that the surface coated with the composition was bisected, and water was jetted on the cleaved surface. A depth of a portion not absorbing water and not exhibiting wet color was measured to specify the depth as a permeation depth.

### (5) Storage Stability (25°C / One Month)

Into a vessel with a capacity of 100 mL, 50 g of each of the compositions was added and sealed, and the vessel was stored in a thermostat at 25°C. After the storage, the properties were checked at every one month for total six months, and a term until a part or all of the composition was separated was evaluated.

### (6) Storage Stability (40°C / One Month)

Into a vessel with a capacity of 100 mL, 50 g of each of the compositions was added and sealed, and the vessel was stored in a thermostat at 40°C. After the storage, the properties were checked at every one month for total six months, and a term until a part or all of the composition was separated was evaluated.

Tables 1 and 2 show the evaluation results. In Table 1, "Dimethylsilicone" refers to polydimethylsiloxane.

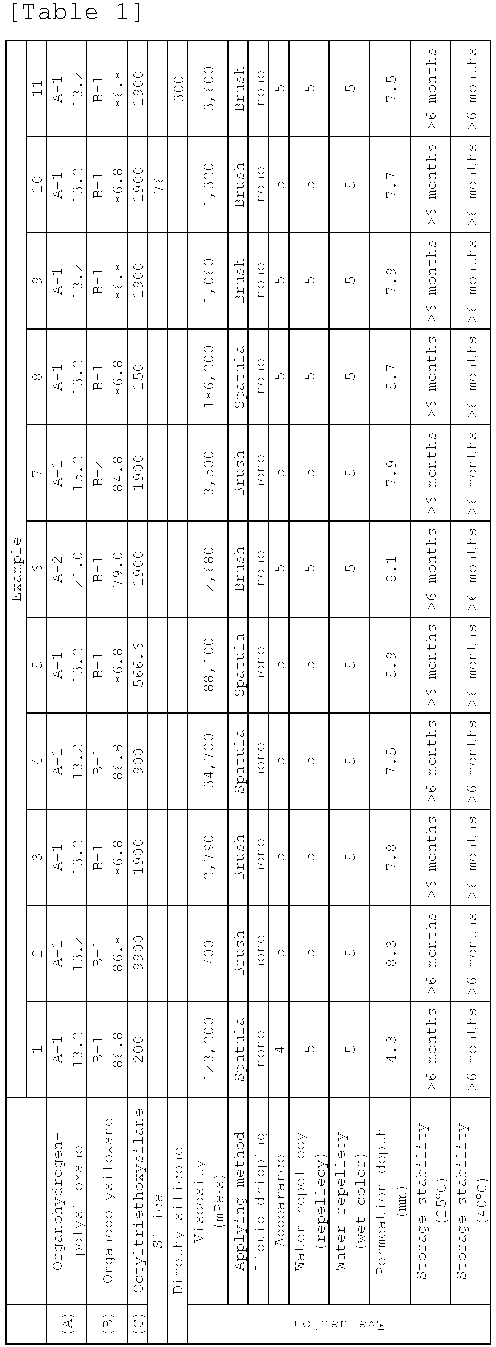

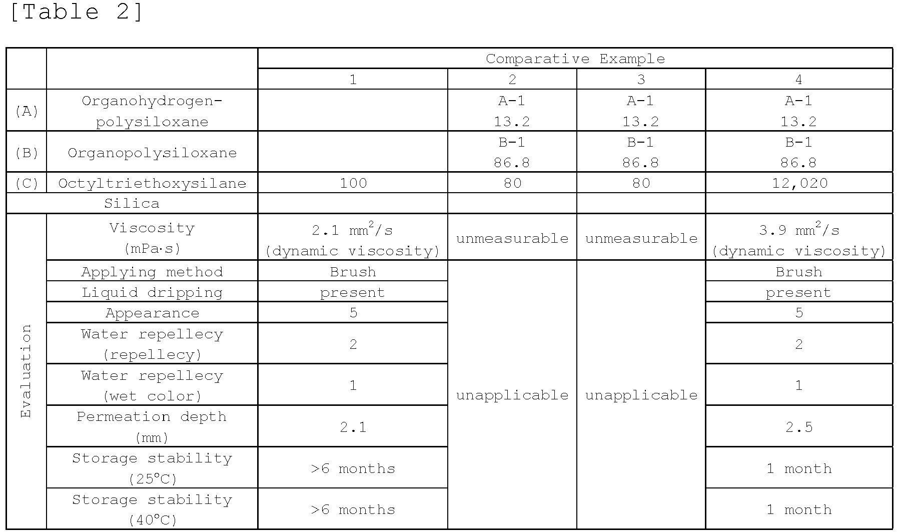

In Examples 1 to 11, which use the organoalkoxysilane-containing composition of the present invention, liquid dripping does not occur during application on the mortar (concrete), the effective component (organoalkoxysilane) can deeply permeate through the mortar surface, and excellent water repellency (water-absorption inhibiting property) can be imparted without impairing the appearance. In addition, Examples yield good operability during the application and excellent storage stability, and keep its properties even when stored at the high temperature for a long term.

Meanwhile, Comparative Example 1, which did not contain the components (A) and (B), caused liquid dripping during the application, insufficient depth of permeating the effective component (permeation depth), and poor water repellency. In Comparative Examples 2 and 3 with the insufficient amount of the component (C), the gel composition was obtained but too hard to be applied. Comparative Example 4 with the excessively large amount of the component (C) caused liquid dripping during the application, insufficient permeation depth, poor water repellency, and poor storage stability.

Applying the organoalkoxysilane-containing composition of the present invention on the substrate surface enables the water-repellent component (C) (effective component) to permeate the substrate surface to make the surface layer hydrophobic.

In particular, the addition reaction product between the component (A) and the component (B) has the three-dimensional crosslinked structure insoluble in the component (C) in the organoalkoxysilane-containing composition of the present invention, and the component (C) is stably encapsulated in the three-dimensional structure of the addition reaction product. The addition reaction product is not dissolved in the component (C) but swelled, and thereby the composition of the present invention can have the viscosity sufficient for application ease, and can contain a large amount of the component (C). These effects yield good operability in applying the organoalkoxysilane-containing composition (water-absorption inhibitor) of the present invention on the structural material, good appearance, and hardly causes unevenness of the water-absorption inhibiting property because the permeation depth of the component (C) into the substrate hardly varies depending on the place.

In the composition of the present invention as above, the component (C) (effective component) is stably encapsulated in the three-dimensional structure of the non-volatile addition reaction product between the component (A) and the component (B), which differs from the conventional solvent-type water-absorption inhibitor and which needs no organic solvent. Thus, the composition of the present invention has no risks of a fire, explosion, poisoning, etc., yields good operation environment during the application, and causes no environmental problem.

In addition, the composition of the present invention does not cause the problem of flowing-out in the conventional aqueous emulsion and the problem of separation of the alkylalkoxysilane after application in the aqueous cream. The addition reaction product between the component (A) and the component (B) is retained on the substrate surface with not dissolution in the component (C) but with swelling even when the composition is applied on a tilted surface, a vertical surface, or a downward surface, and thereby the effective component can sufficiently permeate the substrate surface.

### Industrial Applicability

Use of the composition of the present invention containing the organoalkoxysilane and/or the partial hydrolytic condensate of the organoalkoxysilane as the water-absorption inhibitor yields application ease; causes no liquid dripping during the application; can deeply permeate the effective component (organoalkoxysilane) through the surface of the porous material, woods, synthetic woods, etc.; and can impart the water-absorption inhibiting property without deterioration of appearance. In addition, the composition of the present invention yields good operability during application and excellent storage stability, and can retain its properties even when stored in a long term at high temperature.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. An organoalkoxysilane-containing composition, comprising:
an addition reaction product between (A) an organohydrogenpolysiloxane and (B) an organopolysiloxane; and
(C) an organoalkoxysilane and/or a partial hydrolytic condensate of the organoalkoxysilane, wherein
an amount of the (C) is 100 to 10,000 parts by mass relative to 100 parts by mass of a total amount of the (A) and the (B),
the (A) is an organohydrogenpolysiloxane comprising a structural unit selected from the group consisting of a SiO₂ unit, a HSiO_{1.5} unit, a R¹SiO_{1.5} unit, a R¹HSiO unit, a R¹₂SiO unit, a R¹₂HSiO_{0.5} unit, and a R¹₃SiO_{0.5} unit, wherein R¹ represents a substituted or unsubstituted monovalent hydrocarbon group except for an aliphatic unsaturated group, and comprising 1.5 or more in average of hydrogen atoms bonded to a silicon atom in a molecule,
the (B) is an organopolysiloxane comprising a structural unit selected from the group consisting of a SiO₂ unit, a R²SiO_{1.5} unit, a R¹SiO_{1.5} unit, a R¹R²SiO unit, a R¹₂SiO unit, a R¹₃SiO_{0.5} unit, and a R²₂R²SiO_{0.5} unit, wherein R¹ represents the same as above and R² represents an alkenyl group, and comprising 1.5 or more in average of alkenyl groups bonded to a silicon atom in a molecule, and
the (C) is an organoalkoxysilane represented by the following formula (1) and/or a partial hydrolytic condensate of the organoalkoxysilane,
R³ₐSi(OR⁴)₄₋ₐ (1)
wherein R³ each independently represents a monovalent hydrocarbon group having 1 to 20 carbon atoms and optionally having an amino group, an epoxy group, or a halogen atom; R⁴ each independently represents a monovalent hydrocarbon group having 1 to 8 carbon atoms; and "a" represents 1, 2, or 3.

2. The organoalkoxysilane-containing composition according to claim 1, wherein R³ in the formula (1) represents an alkyl group having 4 to 16 carbon atoms.

3. The organoalkoxysilane-containing composition according to claim 2, wherein R³ in the formula (1) represents an alkyl group having 6 to 12 carbon atoms.

4. The organoalkoxysilane-containing composition according to any one of claims 1 to 3, wherein the organoalkoxysilane-containing composition has a viscosity at 25°C of 100 to 500,000 mPa·s, the viscosity being measured with a rotary viscosimeter.

5. A water-absorption inhibitor, comprising the organoalkoxysilane-containing composition according to any one of claims 1 to 4.

6. A method for manufacturing the organoalkoxysilane-containing composition according to any one of claims 1 to 4, the method comprising a first step of stirring and addition-polymerizing 100 parts by mass of a total amount of the component (A) and the component (B) in the presence of 100 to 1500 parts by mass of the component (C) to obtain an addition reaction product.

7. The method for manufacturing the organoalkoxysilane-containing composition according to claim 6, further comprising a second step of further mixing the component (C) with the addition reaction product so that a total amount of the component (C) is 100 to 10000 parts by mass relative to 100 parts by mass of the total amount of the component (A) and the component (B).

8. A method for imparting a water-absorption inhibiting property, the method comprising a step of applying the water-absorption inhibitor according to claim 5 on a surface of a structural material.

9. The method for imparting a water-absorption inhibiting property according to claim 8, wherein the water-absorption inhibitor is applied by using a spray, spraying, a roller, or a brush where a viscosity at 25°C of the water-absorption inhibitor measured with a rotary viscosimeter is 100 to 50,000 mPa·s, and the water-absorption inhibitor is applied by using a trowel or a spatula where a viscosity at 25°C of the water-absorption inhibitor measured with a rotary viscosimeter is 5,000 to 500,000 mPa.s.

10. A method for manufacturing a surface-treated structural material, the method comprising a step of surface-treating a structural unit with the water-absorption inhibitor according to claim 5.
